# EUROPEAN PATENT APPLICATION

(11) **EP 3 352 446 A1**
(43) Date of publication of application: **25.07.2018**
(21) Application number: 17154510.6
(22) Date of filing: 03.02.2017
(51) Int. Cl.: H04N 5/225, H04N 5/232

(54) **MULTI-CAMERA DYNAMIC IMAGING SYSTEMS AND METHODS OF CAPTURING DYNAMIC IMAGES**

(30) Priority: 18.01.2017 US 201715409169
(71) Applicant: Conway, Jerry L., Hoover, Al 35244 (US); Jiang, Ming, Alpharetta, GA 30022 (US)
(72) Inventor: Conway, Jerry L., Hoover, Al 35244 (US); Jiang, Ming, Alpharetta, GA 30022 (US)
(74) Representative: Weickmann & Weickmann PartmbB

(57) **Abstract**

Aspects of present disclosure relates to multi-camera dynamic imaging systems and methods of capturing dynamic images. Multi-camera dynamic imaging system includes multiple cameras and a dynamic imaging system. The multiple cameras capture image signal of a set of focused images of a number of objects within a visual scene. Multiple objects are divided into one or more groups of objects, and each group has one or more objects within a predetermined distance range. Each of focused images is focused at each of the one or more groups of one or more objects. The dynamic imaging system receives, processes and stores the image signal of the set of focused images captured by the multiple cameras. Each camera has a sensor to capture a focused image of a group of objects, an auto-focus lens to focus on the group, and a communication channel to transmit the focused image of the group.

## Description

### FIELD

The present disclosure generally relates to dynamic image, and more particularly to multi-camera dynamic imaging systems and methods of capturing dynamic images.

### BACKGROUND

Aperture and focusing distance are the two primary factors that determine how sharp a still picture will be on a camera's sensor. Larger apertures (smaller F-stop numbers) and closer focusing distances produce a shallower depth of field. For example, in portrait photography, a well taken picture may focus on the person so that the portrait of the person will appear very sharp and clear while other objects such as flowers, buildings, trees, etc. in front of and beyond the person appear soft and out of focus. In this case, the photographer takes advantage of the large aperture to emphasize the person, and deemphasize everything else. However, when taking a picture of a large gathering such as a concert, or a meeting where there are many people at different distances, the photographer is presented with a dilemma: where to place the focus of the picture. Although a smaller aperture can increase the depth of the field, it is impossible to take a picture with everything in focus. The photographer has to decide where to focus and then take the picture. Once the picture is taken, the depth of field in the picture is permanent and unalterable and the sharpness of anything outside the selected depth of field is forever lost. Therefore, all other elements in the photograph outside this depth of field will not be recorded in detail making it impossible for any other viewer of the photograph to see those afore mentioned portions of the picture in focus.

Therefore, heretofore unaddressed needs still exist in the art to address the aforementioned deficiencies and inadequacies.

### SUMMARY

In one aspect, the present disclosure relates to a multi-camera dynamic imaging system. In certain embodiments, the multi-camera dynamic imaging system includes multiple cameras and a dynamic imaging system. The multiple cameras capture image signal of a set of focused images of a number of objects within a visual scene via a common optical path of an external lens, and a beam splitter optically coupled to each of the multiple cameras. The multiple objects may be divided into one or more groups of objects, and each group has one or more objects within a predetermined distance range. Each focused image is focused at each of the one or more groups of one or more objects. The dynamic imaging system receives, processes and stores the image signal of the set of focused images captured by the multiple cameras. Each camera has a sensor to capture image signal of a focused image of a group of one or more objects, an auto-focus lens to focus on one of the one or more groups of one or more objects, and a communication channel to transmit the focused image of the group of one or more objects captured from the sensor.

In certain embodiments, a dynamic image captured by the multi-camera dynamic imaging system includes the set of focused images. Each focused image is associated with a corresponding focusing distance of each of the one or more groups of one or more objects.

In certain embodiments, the dynamic imaging system includes: an image signal mixer, an image processing device, an image storage device, and a dynamic image display device. The image signal mixer receives the image signal of the set of focused images from each of the multiple cameras through each of the communication channels. The image processing device processes the image signal of the set of focused images received from the image signal mixer to form the dynamic image. The image storage device stores the dynamic image processed by the image processing device. The dynamic image display device displays the dynamic image.

In one embodiment, the dynamic image display device may include a gaze detection device which measures eye positions and eye movement of a viewer. When a viewer moves his/her eyes towards a group of one or more objects, the gaze detection device detects the viewer's eyes are aimed at the group of one or more objects, a focused image of the dynamic image corresponding to the group of one or more objects is dynamically and interactively displayed on the dynamic image display device. In another embodiment, the dynamic image display device may include touch screen input device or a mouse pointing device. When the viewer touches a group of one or more objects on the screen, or uses the mouse to click the group of one or more objects on the screen, a focused image of the dynamic image corresponding to the group of one or more objects is dynamically and interactively displayed on the dynamic image display device.

In certain embodiments, the present disclosure relates to a dynamic video recording system having the multi-camera dynamic imaging system.

In another aspect, the present disclosure relates to a method of capturing a dynamic image using a multi-camera dynamic imaging system. In certain embodiments, the method includes: adjusting focusing distances of multiple cameras to multiple objects within a visual scene, and capturing, by a sensor of each of the multiple cameras, image signal of a set of focused images of the one or more groups of one or more objects when each of the one or more groups of one or more objects is detected to be in focus. The multiple objects include one or more groups of objects. Each group includes one or more objects within a predetermined distance range.

In certain embodiments, the method also includes: receiving, at an image signal mixer of a dynamic imaging system, the image signal of the set of focused images from each of the multiple cameras through a corresponding communication channel, processing, by an image processing device of the dynamic imaging system, the image signal of the set of focused images received by the image signal mixer to form the dynamic image, and storing, by an image storage device of the dynamic imaging system, the dynamic image processed by the image processing device. The dynamic image includes the set of focused images captured, processed and stored. Each focused image is associated with a corresponding focusing distance of a group of one or more objects.

In certain embodiments, the method may also include displaying the dynamic image on a dynamic image display device. In one embodiment, the dynamic image display device may include a gaze detection device which measures eye positions and eye movement of a viewer. When a viewer moves his/her eyes towards a group of one or more objects, the gaze detection device detects the viewer's eyes are aimed at the group of one or more objects, a focused image of the dynamic image corresponding to the group of one or more objects is dynamically and interactively displayed on the dynamic image display device. In another embodiment, the dynamic image display device may include a touch screen input device or a mouse pointing device. When the viewer touches a group of one or more objects on the screen, or uses the mouse to click the group of one or more objects on the screen, a focused image of the dynamic image corresponding to the group of one or more objects is dynamically and interactively displayed on the dynamic image display device.

These and other aspects of the present disclosure will become apparent from the following description of the preferred embodiment taken in conjunction with the following drawings and their captions, although variations and modifications therein may be affected without departing from the spirit and scope of the novel concepts of the disclosure.

### BRIEF DESCRIPTION OF THE DRAWINGS

The accompanying drawings illustrate one or more embodiments of the disclosure and, together with the written description, serve to explain the principles of the disclosure. Wherever possible, the same reference numbers are used throughout the drawings to refer to the same or like elements of an embodiment, and wherein:
FIG. 1 schematically shows a block diagram of a multi-camera dynamic imaging system according to certain embodiments of the present disclosure;
FIG. 2 illustrates an exemplary dynamic image capturing of an exemplary visual scene using the multi-camera dynamic imaging system according to certain embodiments of the present disclosure;
FIG. 3 is a block diagram of a multi-camera dynamic imaging system having five cameras according to an exemplary embodiment of the present disclosure;
FIG. 4 illustrates the visual scene having multiple objects according to certain embodiments of the present disclosure;
FIG. 5 illustrates capturing a sequence of focused images of the objects at various focal distances according to certain embodiments of the present disclosure;
FIG. 6A illustrates a first focused image of a first group of objects, FIG. 6B illustrates a second focused image of a second group of objects, and FIG. 6C illustrates a third focused image of a third group of objects and a background of the visual scene according to one embodiment of the present disclosure; and
FIG. 7 is a flow chart illustrating a method of capturing dynamic images using the multi-camera dynamic imaging system according to certain embodiments of the present disclosure.

### DETAILED DESCRIPTION

The present disclosure is more particularly described in the following examples that are intended as illustrative only since numerous modifications and variations therein will be apparent to those skilled in the art. Various embodiments of the disclosure are now described in detail. Referring to the drawings, like numbers, if any, indicate like components throughout the views. As used in the description herein and throughout the claims that follow, the meaning of "a", "an", and "the" includes plural reference unless the context clearly dictates otherwise. Also, as used in the description herein and throughout the claims that follow, the meaning of "in" includes "in" and "on" unless the context clearly dictates otherwise. Moreover, titles or subtitles may be used in the specification for the convenience of a reader, which shall have no influence on the scope of the present disclosure. Additionally, some terms used in this specification are more specifically defined below.

The terms used in this specification generally have their ordinary meanings in the art, within the context of the disclosure, and in the specific context where each term is used. Certain terms that are used to describe the disclosure are discussed below, or elsewhere in the specification, to provide additional guidance to the practitioner regarding the description of the disclosure. For convenience, certain terms may be highlighted, for example using italics and/or quotation marks. The use of highlighting has no influence on the scope and meaning of a term; the scope and meaning of a term is the same, in the same context, whether or not it is highlighted. It will be appreciated that same thing can be said in more than one way. Consequently, alternative language and synonyms may be used for any one or more of the terms discussed herein, nor is any special significance to be placed upon whether or not a term is elaborated or discussed herein. Synonyms for certain terms are provided. A recital of one or more synonyms does not exclude the use of other synonyms. The use of examples anywhere in this specification including examples of any terms discussed herein is illustrative only, and in no way limits the scope and meaning of the disclosure or of any exemplified term. Likewise, the disclosure is not limited to various embodiments given in this specification.

Unless otherwise defined, all technical and scientific terms used herein have the same meaning as commonly understood by one of ordinary skill in the art to which this disclosure pertains. In the case of conflict, the present document, including definitions will control.

As used herein, "around", "about" or "approximately" shall generally mean within 20 percent, preferably within 10 percent, and more preferably within 5 percent of a
given value or range. Numerical quantities given herein are approximate,
meaning that the term "around", "about" or "approximately" can be inferred if not expressly stated.

As used herein, "plurality" means two or more.

As used herein, the terms "comprising," "including," "carrying," "having," "containing," "involving," and the like are to be understood to be open-ended, i.e., to mean including but not limited to.

As used herein, the phrase at least one of A, B, and C should be construed to mean a logical (A or B or C), using a non-exclusive logical OR. It should be understood that one or more steps within a method may be executed in different order (or concurrently) without altering the principles of the present disclosure.

As used herein, the term module/device may refer to, be part of, or include an Application Specific Integrated Circuit (ASIC); an electronic circuit; a combinational logic circuit; a field programmable gate array (FPGA); a processor (shared, dedicated, or group) that executes code; other suitable hardware components that provide the described functionality; or a combination of some or all of the above, such as in a system-on-chip. The term module/device may include memory (shared, dedicated, or group) that stores code executed by the processor.

The term code, as used above, may include software, firmware, and/or microcode, and may refer to programs, routines, functions, classes, and/or objects. The term shared, as used above, means that some or all code from multiple modules may be executed using a single (shared) processor. In addition, some or all code from multiple modules may be stored by a single (shared) memory. The term group, as used above, means that some or all code from a single module may be executed using a group of processors. In addition, some or all code from a single module may be stored using a group of memories.

The apparatuses and methods described herein may be implemented by one or more computer programs executed by one or more processors. The computer programs include processor-executable instructions that are stored on a non-transitory tangible computer readable medium. The computer programs may also include stored data. Non-limiting examples of the non-transitory tangible computer readable medium are nonvolatile memory, magnetic storage, and optical storage.

The present disclosure will now be described more fully hereinafter with reference to the accompanying drawings, in which embodiments of the disclosure are shown. This disclosure may, however, be embodied in many different forms and should not be construed as limited to the embodiments set forth herein; rather, these embodiments are provided so that this disclosure will be thorough and complete, and will fully convey the scope of the disclosure to those skilled in the art. Like numbers refer to like elements throughout.

As described in the background, when a portrait is taken, the portrait may focus on a person such that the person in the portrait may appear very sharp and clear in the picture, while other objects such as buildings or trees in the background away from the person may appear soft and out of focus. However, when taking a picture or video of a large gathering such as a concert, or a meeting where there are many people, the photographer is presented with a dilemma: where to place the focus of the picture. Although a smaller aperture can increase the depth of the field, but it is impossible to take a picture with everything in focus. The photographer has to decide where to focus and then take the photo. Once the picture is taken, the depth of field in the picture is permanent and unalterable and the sharpness of anything outside the selected depth of field is forever lost. Therefore, all other elements in the photograph outside this depth of field will not be recorded in detail making it impossible for any other viewer of the photograph to see those afore mentioned portions of the picture in focus.

The present disclosure relates to a multi-camera dynamic imaging system 100 that takes a dynamic image of a visual scene. The dynamic image includes not only one picture where the photographer chooses to focus, but also multiple focused images of the visual scene, and each focused image is focused on objects at different focusing distances. Additional information of the visual scene is preserved and may be displayed. A dynamic image display device may be used to display the dynamic image. In one embodiment, the dynamic image display device may include a gaze detection device. The gaze detection device is a device for measuring eye positions and eye movement of a viewer. When the viewer moves his/her eyes towards a group of one or more objects, the gaze detection device detects the viewer's eyes are aimed at the group of one or more objects, a focused image of the dynamic image corresponding to the group of one or more objects is dynamically and interactively displayed on the dynamic image display device. In another embodiment, the dynamic image display device may include a touch screen input device or a mouse pointing device. When the viewer touches a group of one or more objects shown on the dynamic image display device, or uses the mouse to click the group of one or more objects shown on the dynamic image display device, a focused image of the dynamic image corresponding to the group of one or more objects is dynamically and interactively displayed on the dynamic image display device.

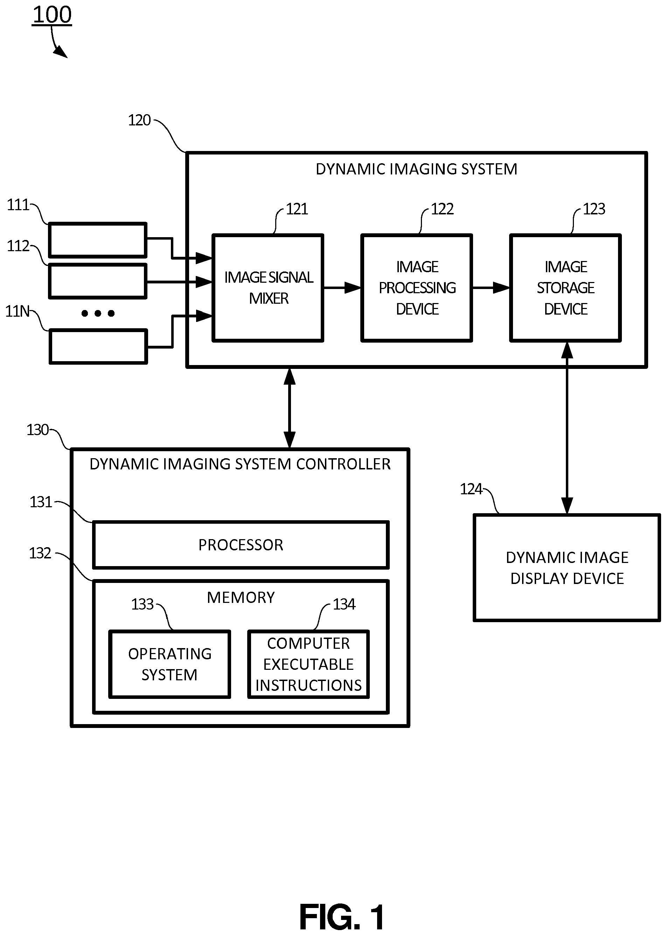

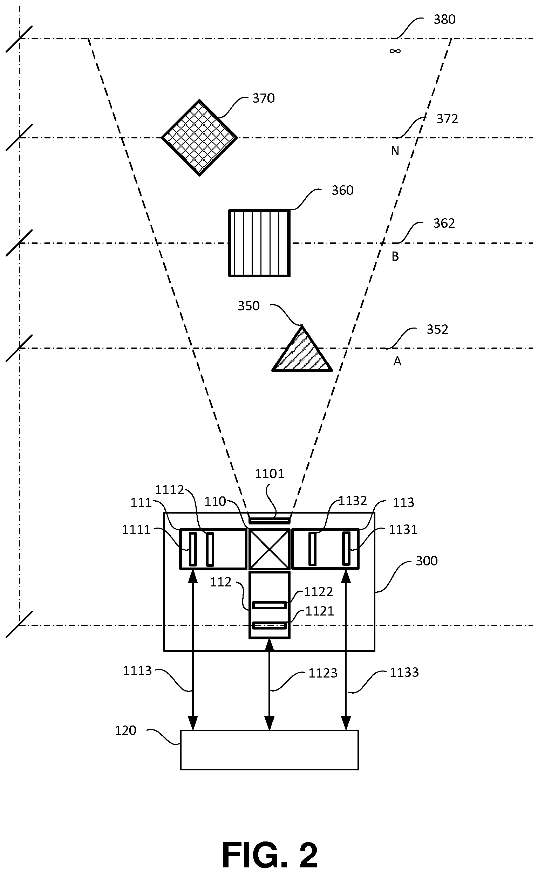

In one aspect, the present disclosure relates to a multi-camera dynamic imaging system 100 as shown in FIG. 1 and FIG. 2. In certain embodiments, the multi-camera dynamic imaging system 100 includes multiple cameras 111, 112, ..., and 11N and a dynamic imaging system 120, where N is a positive integer. The multiple cameras capture image signal of a set of focused images of a number of objects within a visual scene via a common optical path of an external lens 1101, and a beam splitter 110 optically coupled to each of the multiple cameras. The multiple objects may be divided into one or more groups of objects, and each group has one or more objects within a predetermined distance range. In certain embodiments, each focused image is focused at each of the one or more groups of objects. The dynamic imaging system 120 receives, processes, and stores the image signal of the set of focused images captured by the multiple cameras.

In one embodiment, the multi-camera dynamic imaging system 100 includes three cameras, a first camera 111, a second camera 112, and a third camera 113, capturing three focused images, as shown in FIG. 2. Each of the first camera 111, the second camera 112 and the third camera 113 is optically coupled to the common optical path through the beam splitter 110. The first camera 111 has a first sensor 1111 to capture image signal of a first focused image of a first group of one or more objects, a first auto-focus lens 1112 to focus on the first group of objects, and a first communication channel 1113 to transmit the first focused image of the first group of objects captured from the first sensor 1111 to the dynamic imaging system 120. The second camera 112 has a second sensor 1121 to capture image signal of a second focused image of a second group of one or more objects, a second auto-focus lens 1122 to focus on the second group of objects, and a second communication channel 1123 to transmit the second focused image of the second group of objects captured from the second sensor 1121 to the dynamic imaging system 120. The third camera 113 has a third sensor 1131 to capture image signal of a third focused image of a third group of one or more objects, a third auto-focus lens 1132 to focus on the third group of objects, and a third communication channel 1133 to transmit the third focused image of the third group of objects captured from the third sensor 1131 to the dynamic imaging system 120.

In certain embodiments, a dynamic image captured by the multi-camera dynamic imaging system 100 includes the set of focused images. Each focused image is associated with a corresponding focusing distance of each of the one or more groups of one or more objects. In one embodiment, as shown in FIG. 2, the dynamic image captured by the multi-camera dynamic imaging system 100 includes the first focused image captured by the first camera 111, the second focused image captured by the second camera 112, and the third focused image captured by the third camera 113. The first focused image focuses on a first group of one or more objects within a near focal distance. The second focused image focuses on a second group of one or more objects within a medium focal distance. The third focused image focuses on a third group of one or more objects within a far focal distance. As shown in FIG. 2, the first group includes a triangular shaped object 350, the second group includes a rectangular shaped object 360, and the third group includes a diamond shaped object 370. In certain embodiments, the near focal distance may be defined as a range less than about 30% of a distance between the multiple cameras to infinity of the visual scene, the medium focal distance may be defined as within a range about 30% to 60% of the distance between the multiple cameras to the infinity of the visual scene, and the far focal distance may be defined as within a range greater than about 60% of the distance between the multiple cameras to the infinity of the visual scene.

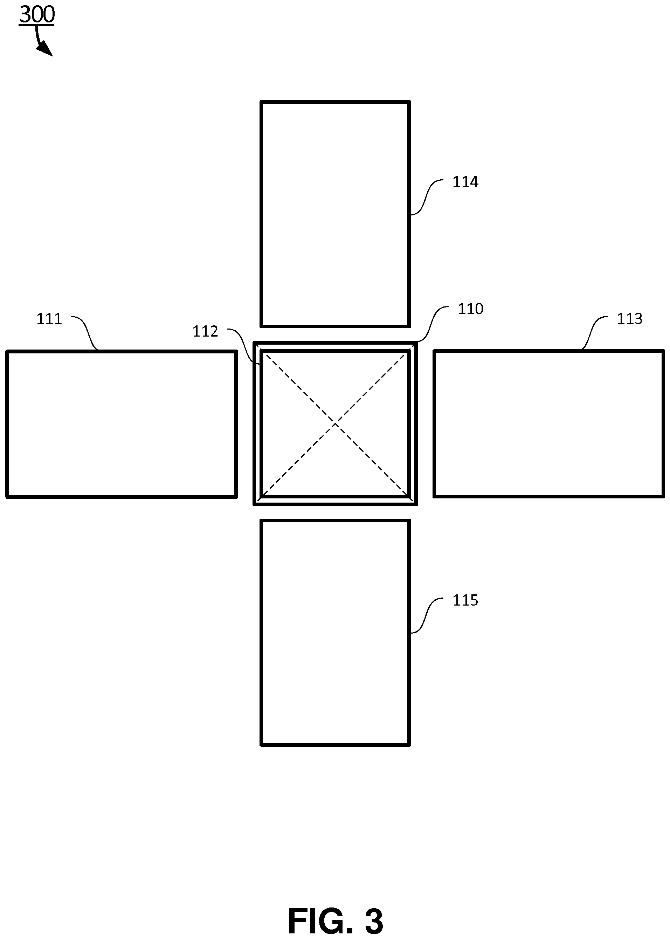

In another embodiment, the multi-camera dynamic imaging system 100 includes five cameras, a first camera 111, a second camera 112, a third camera 113, a fourth camera 114, and a fifth camera 115 capturing five focused images, as shown in FIG. 3. Each of the first camera 111, the second camera 112, the third camera 113, the fourth camera 114, and the fifth camera 115 is optically coupled to the common optical path through the beam splitter 110. In addition to the first camera 111, the second camera 112, and the third camera 113, as shown in FIG. 2, the fourth camera 114 is installed on the top end of the beam splitter 110, and the fifth camera 115 is installed on the bottom end of the beam splitter 110. The fourth camera 114 has a fourth sensor 1141 (not shown in FIG. 3) to capture image signal of a fourth focused image of a fourth group of one or more objects, a fourth auto-focus lens 1142 (not shown in FIG. 3) to focus on the fourth group of objects, and a fourth communication channel 1143 (not shown in FIG. 3) to transmit the fourth focused image of the fourth group of objects captured from the fourth sensor 1141 (not shown in FIG. 3) to the dynamic imaging system 120. The fifth camera 115 has a fifth sensor 1151 (not shown in FIG. 3) to capture image signal of a fifth focused image of a fifth group of one or more objects, a fifth auto-focus lens 1152 (not shown in FIG. 3) to focus on the fifth group of objects, and a fifth communication channel 1153 (not shown in FIG. 3) to transmit the fifth focused image of the fifth group of objects captured from the fifth sensor 1151 to the dynamic imaging system 120.

In certain embodiments, additional cameras may be installed in the multi-camera dynamic imaging system 100 to capture additional focused images of the visual scene.

In certain embodiments, the dynamic imaging system 120 includes: an image signal mixer 121, an image processing device 122, and an image storage device 123. The image signal mixer 121 receives the image signal of the set of focused images from each of the multiple cameras through each of the communication channels. The image processing device 122 processes the image signal of the set of focused images received from the image signal mixer 121 to form the dynamic image. The image storage device 123 stores the dynamic image processed by the image processing device 122.

In certain embodiments, the dynamic imaging system 120 includes a dynamic imaging system controller 130 for controlling the dynamic imaging system 120. The dynamic imaging system controller 130 has one or more processors 131. In one embodiment, the processors 131 may include a reduced instruction set computer (RISC) microprocessor. The processors 131 are coupled to a system memory 132 and various other components via a system bus (not shown in FIG. 1). In one embodiment, the system memory 132 may include a Read Only Memory (ROM) coupled to the processors 131 and may include a basic input/output system (BIOS), which controls certain basic functions of the dynamic imaging system controller 130.

In exemplary embodiments, the processors 131 may include a graphics processing unit (not shown in FIG. 1). The graphics processing unit is a specialized electronic circuit designed to manipulate and alter memory to accelerate the creation of images in a frame buffer intended for output to a display. In general, the graphics processing unit is very efficient at manipulating computer graphics and image processing, and has a highly parallel structure that makes it more effective than general-purpose CPUs for algorithms where processing of large blocks of data is done in parallel.

In certain embodiments, as configured in FIG. 1, the dynamic imaging system controller 130 includes processing capability in the form of the processors 131, storage capability including the system memory 132 and the image storage device 123, image input from the cameras 111, 112, ..., and 11N and output capability to the dynamic image display device 124. In one embodiment, a portion of the system memory 132 may store one or more operating systems 133 as well as computer executable instructions 134 (including various application programs not shown in FIG. 1) to manage, control and coordinate the functions of the various components of the dynamic imaging system controller 130 as shown in FIG. 1. The set of application programs, inclusive of certain utility programs, may also provide a graphical user interface to the user. A web browser is an application program and runs on the operating system. The operating system is operable to multitask, i.e., execute computing tasks in multiple threads, and thus may include, but not limited to any of the following: MICROSOFT CORPORATION's "WINDOWS XP" or "WINDOWS NT", "WINDOWS Vista,", "WINDOWS 7," "WINDOWS 8," and "WINDOWS 10" operating systems, IBM's OS/2 WARP, APPLE's MACINTOSH OSX operating system, LINUX, UNIX, etc. The web browser may include one or more of: SAFARI, CHROME, FIREFOX, and INTERNET EXPLORER.

In certain embodiments, the dynamic imaging system 120 may include a dynamic image display device 124. The dynamic image display device 124 displays the dynamic image. In one embodiment, the dynamic image display device 124 includes a gaze detection device. The gaze detection device is a device for measuring eye positions and eye movement of a viewer. When the viewer moves his/her eyes towards a group of one or more objects, the gaze detection device detects the viewer's eyes are aimed at the group of one or more objects, a focused image of the dynamic image corresponding to the group of one or more objects is dynamically and interactively displayed on the dynamic image display device 124. In another embodiment, the dynamic image display device 124 may include a touch screen input device or a mouse pointing device. When the viewer touches a group of one or more objects on the screen, or uses the mouse to click the group of one or more objects on the screen, a focused image of the dynamic image corresponding to the group of one or more objects is dynamically and interactively displayed on the dynamic image display device 124.

In certain embodiments, the dynamic image display device 124 may include monitors, television sets, flat panel displays, touch screen displays, computer monitors, laptop computer screens, tablet display screens, digital picture frames, smartphone display screens, as well as any digital image display devices. The dynamic image display device 124 may include a gaze detection device to detect the viewer's eye movement, and a touch screen or a mouse to receive viewer's input.

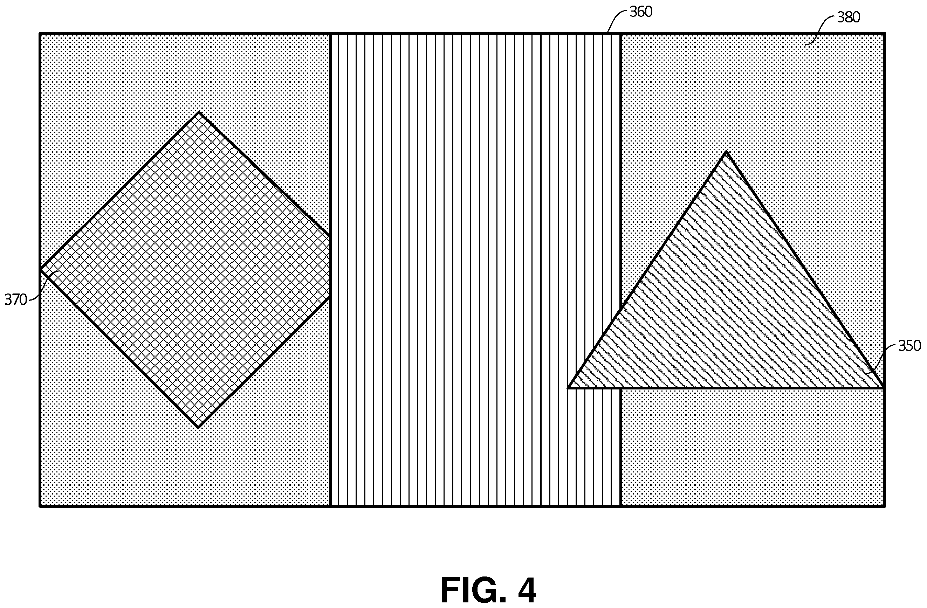

In one aspect, the present disclosure relates to a dynamic image of a visual scene as shown in FIG. 2. The visual scene may include many groups of objects, and each group may include one or more objects. In an exemplary embodiment, as shown in FIG. 2, there are three groups of objects. For the purpose of simplicity, each group contains one object. A first group includes a triangular shape 350 in diagonal line pattern. A second group includes a rectangular shape 360 in vertical line pattern. A third group includes a diamond shape 370 in a diagonal grid pattern. These three groups are arranged at different distances from the first camera 111, the second camera 112, and the third camera 113. Ever since photography was invented in the nineteenth century, a still image of the visual scene may look like an illustrative image shown in FIG. 4. Due to the depth of the field of the camera lens, only one of the three groups of objects may be in focus as decided by a photographer. Other groups of objects may be out of focus. The decision regarding which group is in focus and which group is out of focus is decided by the photographer when the photographer takes the photo. For example, if the photographer focuses the first group of objects 350 when the photo was taken, the first group of objects 350 will be in focus and the second group of objects 360 and the third group of objects 370 will be out of focus. Once the photo is taken, information related to the focused image of one of the groups of objects is recorded, and information related to the other, out of focus groups of objects will be forever lost. When the photo is shown either as a printed picture, or displayed in a display device, a viewer can only see the focused image of the first group of objects 350, and will not be able to see the focused images of the second or third groups of objects 360 and 370. This is the shortcoming of conventional photography and this shortcoming remains in the field of photography ever since the photography was invented almost 200 years ago.

The dynamic image of the visual scene is designed to overcome the above mentioned shortcoming of conventional photography and provide additional information to the viewers so that when the viewer is viewing the display of the dynamic image, the viewer is provided with fully immersive and vivid focused images of any groups of objects of the visual scene. The viewer has total freedom to see focused images of any groups of objects in the visual scene, as if the viewer was the photographer, and the focal selection is no longer limited by the focus originally chosen by the photographer.

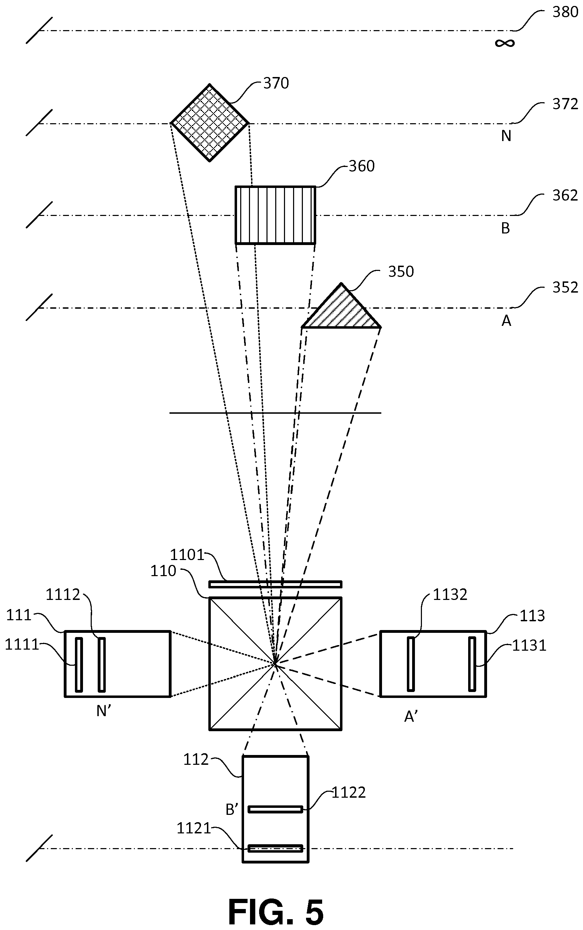

Referring now to FIG. 5, an exemplary dynamic image capturing of the exemplary visual scene using the multi-camera dynamic imaging system is shown according to certain embodiments of the present disclosure. In one embodiment, the multi-camera dynamic imaging system 100 includes three cameras, a first camera 111, a second camera 112, and a third camera 113. A dynamic image captured by the multi-camera dynamic imaging system 100 shown in FIG. 5 includes a set of three focused images, a first focused image taken by the first camera 111 focusing on the first group 350 of one or more objects, a second focused image taken by the second camera 112 focusing on the second group 360 of one or more objects, and a third focused image taken by the third camera 113 focusing on the third group 370 of one or more objects.

The first focused image focuses on the first group of objects within a near focal distance. The second focused image focuses on the second group of objects within a medium focal distance. The third focused image focuses on a third group of one or more objects within a far focal distance. As shown in FIG. 2, the first group includes a triangular shaped object 350, the second group includes a rectangular shaped object 360, and the third group includes a diamond shaped object 370. In certain embodiments, the near focal distance may be defined as a range less than about 30% of a distance between the multiple cameras to infinity of the visual scene, the medium focal distance may be defined as within a range about 30% to 60% of the distance between the multiple cameras to the infinity of the visual scene, and the far focal distance may be defined as within a range greater than about 60% of the distance between the multiple cameras to the infinity of the visual scene.

In certain embodiments, the dynamic imaging system controller 130 of the dynamic imaging system 120 first divides the visual scene into several focal distance regions based on the cameras available. For example, as shown in FIG. 2 and FIG. 5, the multi-camera dynamic imaging system 100 includes three cameras, therefore, the visual scene may be divided into three focal distance regions, one camera for each focal distance region. Then each of the first camera 111, the second camera 112, and the third camera 113 uses auto-focus function to focus on each of the first group 350 , the second group 360 and the third group 370 of objects. Once each of the cameras is in focus, the dynamic imaging system 120 indicates to the photographer that all groups of objects are in focus, the photographer captures the set of focused images: the first focused image focused on the first group 350 of objects, the second focused image focused on the second group 360 of objects, and the third focused image focused on the third group 370 of objects.

In one embodiment, the dynamic image captured by the multi-camera dynamic imaging system 100 includes three focused images: the first image focused on the first group 350 of one or more objects at a near focal distance 352, a second image focused on the second group 360 of objects at a medium focal distance 362, and a third image focused on the third group of one or more objects 370 at a far focal distance 370. Each of the first camera 111, the second camera 112 and the third camera 113 is optically coupled to the common optical path through the beam splitter 110. When a photographer takes the dynamic image of the visual scene, auto-focus functions of the first camera 111, the second camera 112, and the third camera 113 takes following actions to capture the dynamic image as shown in FIG. 4:
The first camera 111 uses the first auto-focus lens 1112 to focus on the first group 350 of objects, the first sensor 1111 to capture image signal of the first focused image of the first group 350 of objects, and the first communication channel 1113 to transmit the first focused image of the first group 350 of objects captured from the first sensor 1111 to the dynamic imaging system 120.

The second camera 112 uses the second auto-focus lens 1122 to focus on the second group 360 of objects, the second sensor 1121 to capture image signal of the second focused image of the second group 360 of objects, and the second communication channel 1123 to transmit the second focused image of the second group 360 of objects captured from the second sensor 1121 to the dynamic imaging system 120.

The third camera 113 uses the third auto-focus lens 1132 to focus on the third group 370 of objects, the third sensor 1131 to capture image signal of the third focused image of the third group 370 of objects, and the third communication channel 1133 to transmit the third focused image of the third group 370 of objects captured from the third sensor 1131 to the dynamic imaging system 120.

In one embodiment, these focused images may be captured simultaneously. In another embodiment, these focused images may be captured sequentially.

The information captured for the set of focused images is much more than a focused image of conventional photo. It includes one focused image for each of the groups of the objects of the visual scene. For example, according to the exemplary embodiment as shown in FIG. 5, the captured set of focused images includes the first focused image of the first group 350 of objects, the second focused image of the second group 360 of objects, and the third focused image of the third group 370 of objects and the background of the visual scene. That is at least three focused images, instead of just one. In certain embodiments as shown in FIG. 3, the set of focused images includes at least five focused images. The captured set of focused images is transmitted to the dynamic imaging system 120 to be processed and stored.

In certain embodiments, these three focused images include certain information that is redundant. For example, only the portion of the first group 350 of objects on the first focused image, the portion of the second group 360 of objects on the second focused image, the portion of the third group of objects 370 on the third focused image as well as the background 380 of the visual scene are important. Everywhere else on the first focused image, the second focused image, and the third focused image are not as important because it is out of focus. In certain embodiments, the image processing device 122 may be used to reduce the image file size by removing the redundant and out of focus portions of the first focused image, the second focused image, the third focused image, and the fourth focused image.

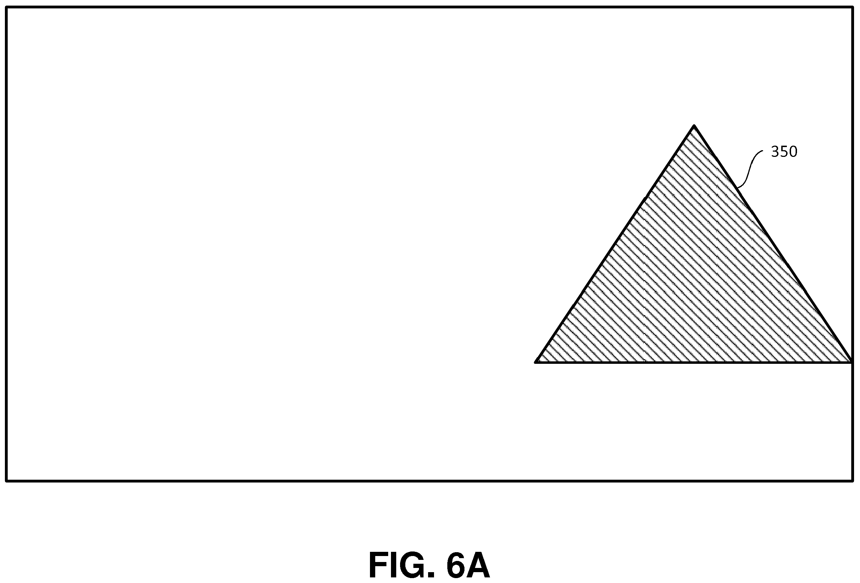

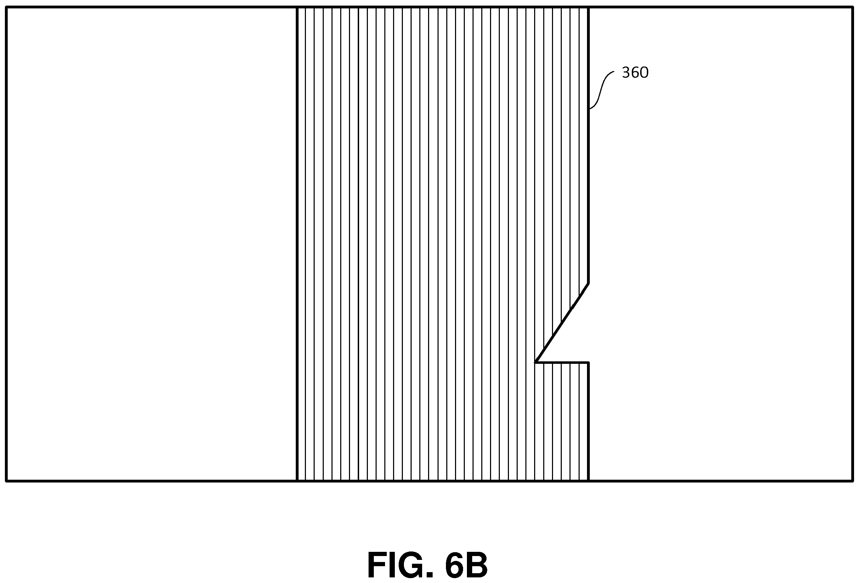

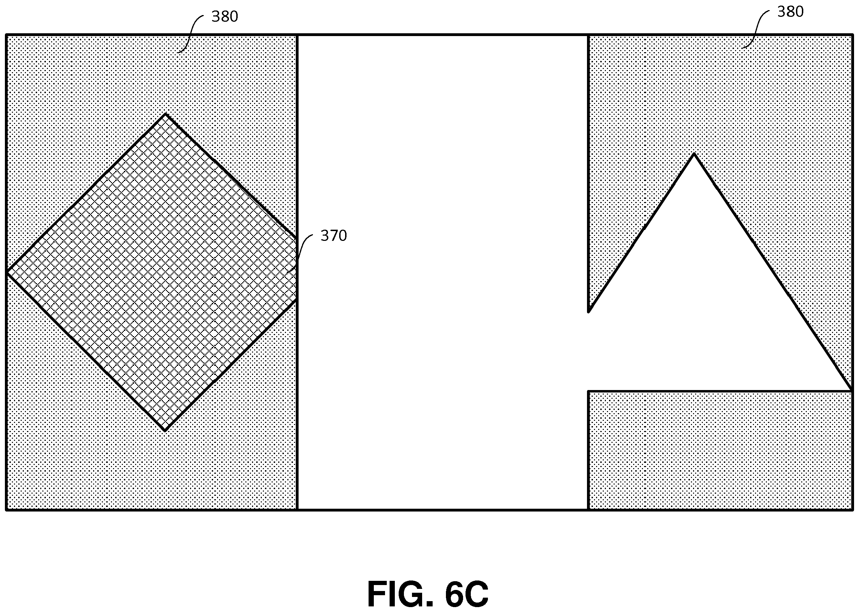

In certain embodiments, a boundary detection software of the dynamic imaging system controller 130 may be used to perform following functions:
detecting the border of the first group 350 of objects of the first focused image, and removing the image data that is not within the border of the first group 350 of objects of the first focused image, as shown in FIG. 6A;
detecting the border of the second group 360 of objects of the second focused image, and removing the image data that is not within the border of the second group 360 of objects of the second focused image, as shown in FIG. 6B; and
detecting the border of the third group of objects 370 and the background 380 of the visual scene of the third focused image, and removing the image data that is not within the border of the third group 370 of objects and the background 380 of the visual scene of the third focused image, as shown in FIG. 6C.

In certain embodiments, each of the multiple cameras uses the auto-focus lens to continuously evaluate, focus and track the focusing distance to a group of one or more objects. In one embodiment, each of the multiple cameras evaluates, focuses and tracks each of the focusing distances to the corresponding group of one or more objects through a principle lens system having a common optical path of the external lens 1101, and the beam splitter 110 optically coupled to each of the multiple cameras. In another embodiment, each of the multiple cameras evaluates, focuses and tracks each of the focusing distances to the corresponding group of one or more objects through a second lens system sharing the same optical path of the principle lens system. In yet another embodiment, each of the multiple cameras evaluates, focuses and tracks each of the focusing distances to the corresponding group of one or more objects through an ancillary optical path.

In certain embodiments, when each of the one or more groups of one or more objects is detected to be in focus by each of the corresponding sensors through the corresponding auto-focus lens, each of the sensors of the multiple cameras captures image signal of a focused image of the group of one or more objects, respectively, records related data of the focused image, and storing the image signal of the focused image and the related data to the image storage device 123. In certain embodiments, the related data of the set of focused images includes: a total number of focused images in the set of focused images, a time when the set of focused images is captured, one or more optical conditions when the set of focused images is captured, GPS location coordinates where the set of focused images is captured, data needed to determine focusing distances to each of the one or more groups of one or more objects within the visual scene for each focused image, and data needed to determine the boundaries of each of the one or more groups of one or more objects within the visual scene for each focused image.

In certain embodiments, the data needed to determine focusing distances to each of the one or more groups of one or more objects within the visual scene for each focused image may be used to assist each of the multiple cameras to reduce the time needed to reacquire focus on each of the groups of objects during an image capturing cycle. The data needed to determine the boundaries of each of the one or more groups of one or more objects may be used to assist each of the multiple cameras and the image processing device 122 to reduce the image file size of the set of focused images.

In certain embodiments, the present disclosure relates to a dynamic video recording system having the multi-camera dynamic imaging system 100.

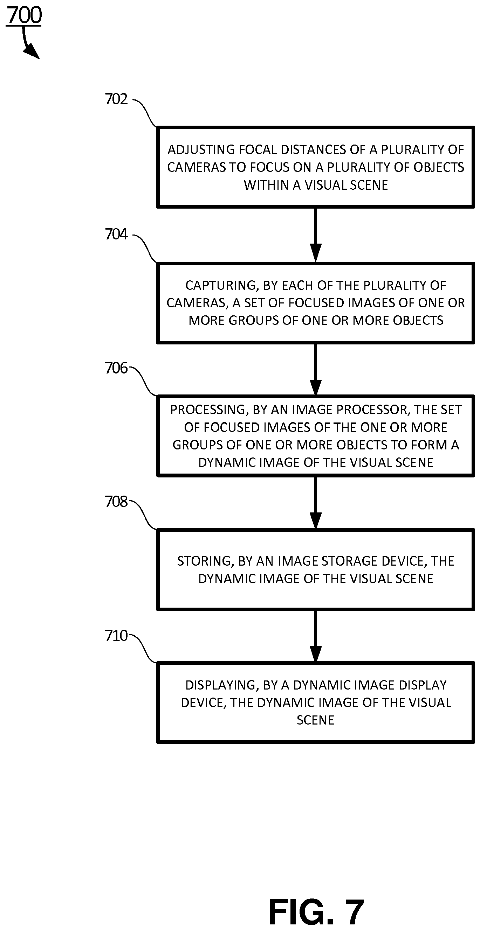

In another aspect, the present disclosure relates to a method 700 of capturing a dynamic image using a multi-camera dynamic imaging system 100 as shown in FIG. 7. In certain embodiments, the method includes following operations:
At block 702, the dynamic imaging system controller 130 of the dynamic imaging system 120 first divides the visual scene into several focal distance regions based on the cameras available. For example, as shown in FIG. 2 and FIG. 5, the multi-camera dynamic imaging system 100 includes three cameras, therefore, the visual scene may be divided into three focal distance regions, one camera for each focal distance region. Then each of the first camera 111, the second camera 112, and the third camera 113 uses auto-focus function to focus on each of the first group 350 , the second group 360 and the third group 370 of objects.

At block 704, once each of the cameras is in focus, the dynamic imaging system 120 indicates to the photographer that all groups of objects are in focus, and the photographer captures the set of focused images: the first focused image focused on the first group 350 of objects, the second focused image focused on the second group 360 of objects, and the third focused image focused on the third group 370 of objects, and records related data of the set of focused images. In one embodiment, these focused images may be captured simultaneously. In another embodiment, these focused images may be captured sequentially.

In certain embodiments, the method includes: capturing a first focused image focusing on a first group of one or more objects within a near focal distance, capturing a second focused image focusing on a second group of one or more objects within a medium focal distance, and capturing a third focused image focusing on a third group of one or more objects within a far focal distance. In one embodiment, the near focal distance may be defined as within a range less than about 30% of a distance between the camera 110 and infinity of the visual scene, the medium focal distance may be defined as within a range about 30% to 60% of the distance between the camera 110 and the infinity of the visual scene, and the far focal distance may be defined as within a range greater than about 60% of the distance between the camera 110 and the infinity of the visual scene.

In certain embodiments, the method may also include: recording related data of the set of focused images. In one embodiment, the related data of the set of focused images includes: a total number of focused images in the set of focused images, a time the set of focused images is captured, one or more optical conditions when the set of focused images is captured, GPS location coordinates where the set of focused images is captured, data needed to determine focusing distances to each of the one or more groups of one or more objects within the visual scene for each focused image, and data needed to determine the boundaries of each of the one or more groups of one or more objects within the visual scene for each focused image.

At block 706, the image signal mixer 121 of the dynamic imaging system 120 of the multi-camera dynamic imaging system 100 receives the image signal of the set of focused images captured by the multiple sensors 1111, 1121, ..., and 11N1 from the multiple cameras 111, 112, ..., and 11N, through the corresponding communication channel 1113, 1123, ..., and 11N3, and the related data of the set of focused images, the image processing device 122 of the dynamic imaging system 120 of the multi-camera dynamic imaging system 100 processes the image signal of the set of focused images received by the image signal mixer 121 to form the dynamic image.

At block 708, the image storage device 123 of the dynamic imaging system 120 of the multi-camera dynamic imaging system 100 stores the dynamic image processed by the image processing device 122. The information of the dynamic image stored in the image storage device 123 includes the set of focused images and the related data of the set of focused images.

At block 710, the method may also include displaying the dynamic image on a dynamic image display device 124. In one embodiment, the dynamic image display device 124 may include a gaze detection device. The gaze detection device is a device for measuring eye positions and eye movement of a viewer. When a viewer moves his/her eyes towards a group of one or more objects, the gaze detection device detects the viewer's eyes are aimed at the group of one or more objects, a focused image of the dynamic image corresponding to the group of one or more objects is dynamically and interactively displayed on the dynamic image display device 124. In another embodiment, the dynamic image display device 124 may include a touch screen input device or a mouse pointing device. When the viewer touches a group of one or more objects on the screen, or uses the mouse to click the group of one or more objects on the screen, a focused image of the dynamic image corresponding to the group of one or more objects is dynamically and interactively displayed on the dynamic image display device 124.

In certain embodiments, the dynamic image display device 124 may include monitors, television sets, flat panel displays, touch screen displays, computer monitors, laptop computer screens, tablet display screens, digital picture frames, smartphone display screens, as well as any digital image display devices. The dynamic image display device 124 may include a gaze detection device to detect the viewer's eye movement, and a touch screen or a mouse to receive viewer's input.

In certain embodiments, when the dynamic image display device 124 does not include the additional equipment as discussed above, the dynamic image may be displayed with each of set of focused images overlaid, where each focused image having the redundant and out of focus portions removed from the set of focused images.

In yet another aspect, the present disclosure relates to a computer program product operable on a dynamic imaging system controller 130 for capturing a dynamic image. The dynamic imaging system controller 130 includes a processor 131 and a non-transitory computer memory 132 readable by the dynamic imaging system controller 130 configured to store computer executable instructions 134 including a dynamic imaging system control program for execution by the processor 131 for performing a method of capturing the dynamic image of a visual scene.

In certain embodiments, the method includes: adjusting focusing distances of multiple cameras to multiple objects within the visual scene, and capturing, by a sensor of each of the multiple cameras 111, 112, ..., and 11N, image signal of a set of focused images of the one or more groups of one or more objects when each of the one or more groups of one or more objects is detected to be in focus. The multiple objects include one or more groups of objects. Each group includes one or more objects within a predetermined distance range.

In certain embodiments, the method also includes: receiving, at the image signal mixer 121 of the dynamic imaging system 120, the image signal of the set of focused images from each of the multiple cameras through a corresponding communication channel, processing, by the image processing device 122 of the dynamic imaging system 120, the image signal of the set of focused images received by the image signal mixer 121 to form the dynamic image, and storing, by an image storage device 123 of the dynamic imaging system 120, the dynamic image processed by the image processing device 122. The dynamic image includes the set of focused images captured, processed and stored. Each focused image is associated with a corresponding focusing distance of a group of one or more objects. The method may also include: displaying the dynamic image on the dynamic image display device 124. When a viewer moves his/her eyes towards a group of one or more objects and the eye movement is detected by a gaze detection device on the dynamic image display device, or when the viewer touches using a touch screen input device or points using a mouse on the group of one or more objects shown on the dynamic image display device, a focused image of the dynamic image corresponding to the group of one or more objects looked at, touched on, or pointed at is displayed dynamically and interactively on the dynamic image display device.

In certain embodiments, the method may include: capturing, by a first camera of the multiple cameras, a first focused image focusing on a first group of one or more objects within a near focal depth, which is within a range less than about 30% of a distance between the cameras to infinity of the visual scene, capturing, by a second camera of the multiple cameras, a second focused image focusing on a second group of one or more objects within a medium focal depth, which is within a range between about 30% to 60% of the distance between the cameras to infinity of the visual scene, and capturing, by a third camera of the multiple cameras, a third focused image focusing on a third group of one or more objects within a far focal depth, which is within a range greater than 60% of the distance between the cameras to infinity of the visual scene.

In certain embodiments, the multi-camera dynamic imaging system 100 includes: the multiple cameras 111, 112, ..., and 11N, the image signal mixer 121, the image processing device 122, the image storage device 123, and the dynamic image display device 124. Each of the multiple cameras 111, 112, ..., and 11N captures the image signal of each focused image within the visual scene via a common optical path of an external lens 1101, and a beam splitter 110 optically coupled to each of the multiple cameras. Each focused image is focused on a corresponding group of one or more objects. Each of the multiple cameras includes a sensor 1111 to capture image signal of a focused image of a corresponding group of one or more objects, an auto-focus lens 1112 to focus on the group of one or more objects, and a communication channel 1113 to transmit the focused image of the group of one or more objects captured from the sensor 1111 to the image signal mixer 121. The image signal mixer 121 receives the image signal of the set of focused images from each of the multiple cameras through each of the communication channels. The image processing device 122 processes the image signal of the set of focused images received from the image signal mixer 121 to form the dynamic image. The image storage device 123 stores the dynamic image processed by image processing device 122. The dynamic image display device 124 displays the dynamic image. When the viewer moves his/her eyes towards a group of one or more objects, a focused image of the dynamic image corresponding to the group of one or more objects is displayed dynamically and interactively on the image display device 124.

In certain embodiments, the method may also include: evaluating, focusing and tracking, by each corresponding auto-focus lens of each of the multiple cameras, the focusing distances of each of the multiple cameras to each of corresponding one or more groups of one or more objects. In one embodiment, the method include: evaluating, focusing and tracking, by each corresponding auto-focus lens of each of the multiple cameras, the focusing distances to each of the multiple cameras on each of corresponding one or more groups of one or more objects through the common optical path of the external lens 1101 and the beam splitter 110. In another embodiment, the method may include: evaluating, focusing and tracking, by each corresponding auto-focus lens of each of the multiple cameras, the focusing distances to each of the multiple cameras on each of corresponding one or more groups of one or more objects through a second lens system sharing the common optical path of the external lens 1101 and the beam splitter 110. In yet another embodiment, the method may also include: evaluating, focusing and tracking, by each corresponding auto-focus lens of each of the multiple cameras, the focusing distances to each of the multiple cameras on each of corresponding one or more groups of one or more objects through an ancillary optical path.

In certain embodiments, the method may also include: recording related data of the set of focused images. The related data of the set of focused images may include: a total number of focused images in the set of focused images, a time the set of focused images is captured, one or more optical conditions when the set of focused images is captured, GPS location coordinates where the set of focused images is captured, data needed to determine focusing distances to each of the one or more groups of one or more objects within the visual scene for each focused image, and data needed to determine the boundaries of each of the one or more groups of one or more objects within the visual scene for each focused image.

In one embodiment, the method may include: assisting each of the multiple cameras in reducing the time needed to reacquire focus on the each of the one or more groups of one or more objects during an image capturing cycle using the data needed to determine focusing distances to each of the one or more groups of one or more objects. In another embodiment, the method may also include: assisting each of the multiple cameras and the image processing device 122 to reduce the image file size of the set of focused images using the data needed to determine the boundaries of each of the one or more groups of one or more objects.

The foregoing description of the exemplary embodiments of the disclosure has been presented only for the purposes of illustration and description and is not intended to be exhaustive or to limit the disclosure to the precise forms disclosed. Many modifications and variations are possible in light of the above teaching.

The embodiments were chosen and described in order to explain the principles of the disclosure and their practical application so as to enable others skilled in the art to utilize the disclosure and various embodiments and with various modifications as are suited to the particular use contemplated. Alternative embodiments will become apparent to those skilled in the art to which the present disclosure pertains without departing from its spirit and scope. Accordingly, the scope of the present disclosure is defined by the appended claims rather than the foregoing description and the exemplary embodiments described therein.

Aspects of present disclosure relates to multi-camera dynamic imaging systems and methods of capturing dynamic images. Multi-camera dynamic imaging system includes multiple cameras and a dynamic imaging system. The multiple cameras capture image signal of a set of focused images of a number of objects within a visual scene. Multiple objects are divided into one or more groups of objects, and each group has one or more objects within a predetermined distance range. Each of focused images is focused at each of the one or more groups of one or more objects. The dynamic imaging system receives, processes and stores the image signal of the set of focused images captured by the multiple cameras. Each camera has a sensor to capture a focused image of a group of objects, an auto-focus lens to focus on the group, and a communication channel to transmit the focused image of the group.

## Claims

1. A multi-camera dynamic imaging system, comprising:
a plurality of cameras to capture image signal of a set of focused images of a plurality of objects within a visual scene via a common optical path of an external lens, and a beam splitter optically coupled to each of the plurality of cameras, wherein the plurality of objects comprises one or more groups of objects, each group having one or more objects within a predetermined distance range, each focused image is focused at each of the one or more groups of one or more objects; and
a dynamic imaging system to receive, process and store the image signal of the set of focused images captured by the plurality of cameras,
wherein each of the plurality of cameras comprises a sensor to capture image signal of a focused image of a group of one or more objects, an auto-focus lens to focus on one of the one or more groups of one or more objects, and a communication channel to transmit the focused image of the group of one or more objects captured from the sensor.

2. The multi-camera dynamic imaging system of claim 1, wherein a dynamic image captured by the multi-camera dynamic imaging system comprises the set of focused images, wherein each focused image is associated with a corresponding focusing distance of each of the one or more groups of one or more objects.

3. The multi-camera dynamic imaging system of claim 1 or 2, wherein the dynamic image captured by the multi-camera dynamic imaging system comprises:
a first focused image, captured by a first camera of the plurality of cameras,
wherein the first focused image focuses on a first group of one or more objects within a near focal distance, wherein the near focal distance is within a range less than about 30% of a distance between the plurality of cameras to infinity of the visual scene;
a second focused image, captured by a second camera of the plurality of cameras, wherein the second focused image focuses on a second group of one or more objects within a medium focal distance, wherein the medium focal distance is within a range about 30% to 60% of the distance between the plurality of cameras to the infinity of the visual scene; and
a third focused image, captured by a third camera of the plurality of cameras,
wherein the third focused image focuses on a third group of one or more objects within a far focal distance, wherein the far focal distance is within a range greater than about 60% of the distance between the plurality of cameras to the infinity of the visual scene.

4. The multi-camera dynamic imaging system of one of claims 1 to 3,
wherein the dynamic imaging system comprises:
an image signal mixer to receive the image signal of the set of focused images from each of the plurality of cameras through each of the communication channels;
an image processing device to process the image signal of the set of focused images received from the image signal mixer to form the dynamic image;
an image storage device to store the dynamic image processed by the image processing device; and
a dynamic image display device to display the dynamic image, wherein when a viewer moves his/her eyes towards a group of one or more objects and the eye movement is detected by a gaze detection device on the dynamic image display device, or when the viewer touches using a touch screen input device or points using a mouse on the group of one or more objects shown on the dynamic image display device, a focused image of the dynamic image corresponding to the group of one or more objects is displayed dynamically and interactively on the dynamic image display device.

5. The multi-camera dynamic imaging system of one of claims 1 to 4,
wherein each of the plurality of cameras uses the auto-focus lens to continuously evaluate, focus and track the focusing distance to a group of one or more objects;
wherein preferably the system is arranged such that
each of the plurality of cameras evaluates, focuses and tracks each of the focusing distances to the corresponding group of one or more objects through a principle lens system;
each of the plurality of cameras evaluates, focuses and tracks each of the focusing distances to the corresponding group of one or more objects through a second lens system sharing a same optical path of the principle lens system; and
each of the plurality of cameras evaluates, focuses and tracks each of the focusing distances to the corresponding group of one or more objects through an ancillary optical path.

6. The multi-camera dynamic imaging system of claim 5, wherein when each of the one or more groups of one or more objects is detected to be in focus by the sensor through the corresponding auto-focus lens, each of the sensor of the plurality of cameras captures image signal of a focused image of the group of one or more objects, respectively, records related data of the focused image, and storing the image signal of the focused image and the related data to the image storage device;
wherein the related data of the set of focused images preferably comprises:
a total number of focused images in the set of focused images;
a time when the set of focused images is captured;
one or more optical conditions when the set of focused images is captured;
GPS location coordinates where the set of focused images is captured;
data needed to determine focusing distances to each of the one or more groups of one or more objects within the visual scene for each focused image; and
data needed to determine the boundaries of each of the one or more groups of one or more objects within the visual scene for each focused image.

7. The multi-camera dynamic imaging system of claim 6,
wherein the data needed to determine focusing distances to each of the one or more groups of one or more objects assists each of the plurality of cameras to reduce the time needed to reacquire focus on each of the one or more groups of one or more objects during an image capturing cycle;
or/and
wherein the data needed to determine the boundaries of each of the one or more groups of one or more objects assists each of the plurality of cameras and the image processing device to reduce the image file size of the set of focused images.

8. A dynamic video recording system comprising the multi-camera dynamic imaging system of one of claims 1 to 7.

9. A method of capturing a dynamic image using a multi-camera dynamic imaging system, comprising:
adjusting focusing distances of a plurality of cameras to a plurality of objects within a visual scene, wherein the plurality of objects comprises one or more groups of objects, each group having one or more objects within a predetermined distance range;
capturing, by a sensor of each of the plurality of cameras, image signal of a set of focused images of the one or more groups of one or more objects when each of the one or more groups of one or more objects is detected to be in focus;
receiving, at an image signal mixer of a dynamic imaging system, the image signal of the set of focused images from each of the plurality of cameras through a corresponding communication channel;
processing, by an image processing device of the dynamic imaging system, the image signal of the set of focused images received by the image signal mixer to form the dynamic image; and
storing, by an image storage device of the dynamic imaging system, the dynamic image processed by the image processing device,
wherein the dynamic image comprises the set of focused images captured, processed and stored, wherein each focused image is associated with a corresponding focusing distance of a group of one or more objects.

10. The method of claim 9, further comprising:
displaying, by a dynamic image display device, the dynamic image, wherein when a viewer moves his/her eyes towards a group of one or more objects and the eye movement is detected by a gaze detection device on the dynamic image display device, or when the viewer touches using a touch screen input device or points using a mouse on the group of one or more objects shown on the stereoscopic dynamic image display device, a focused image of the dynamic image corresponding to the group of one or more objects is displayed dynamically and interactively on the dynamic image display device.

11. The method of claim 9 or 10, further comprising:
capturing, by a first camera of the plurality of cameras, a first focused image focusing on a first group of one or more objects within a near focal distance, wherein the near focal distance is within a range less than about 30% of a distance between the plurality of cameras to infinity of the visual scene;
capturing, by a second camera of the plurality of cameras, a second focused image focusing on a second group of one or more objects within a medium focal distance, wherein the medium focal distance is within a range about 30% to 60% of the distance between the plurality of cameras to infinity of the visual scene; and
capturing, by a third camera of the plurality of cameras, a third focused image focusing on a third group of one or more objects within a far focal distance, wherein the far focal distance is within a range greater than 60% of the distance between the plurality of cameras to infinity of the visual scene.

12. The method of one of claims 9 to 11, wherein the multi-camera dynamic imaging system comprises:
the plurality of cameras to capture the image signal of the set of focused images within the visual scene via a common optical path of an external lens, and a beam splitter optically coupled to each of the plurality of cameras, wherein each focused image is focused on a corresponding group of one or more objects, wherein each of the plurality of cameras comprises a sensor to capture image signal of a focused image of a corresponding group of one or more objects, an auto-focus lens to focus on the group of one or more objects, and the communication channel to transmit the focused image of the group of one or more objects captured from the sensor to the image signal mixer;
the image signal mixer to receive the image signal of the set of focused images from the plurality of cameras through the plurality of communication channels;
the image processing device to process the image signal of the set of focused images received from the image signal mixer to form the dynamic image;
the image storage device to store the dynamic image processed by the image processing device; and
the dynamic image display device to display the dynamic image, wherein when the viewer moves his/her eyes towards a group of one or more objects, a focused image of the dynamic image corresponding to the group of one or more objects is displayed dynamically and interactively on the dynamic image display device;
wherein the method preferably further comprises:
evaluating, focusing and tracking, by each corresponding auto-focus lens of each of the multiple cameras, the focusing distances of each of the plurality of cameras to each of corresponding one or more groups of one or more objects.

13. The method of claim 12, further comprising:
evaluating, focusing and tracking, by each corresponding auto-focus lens of each of the multiple cameras, the focusing distances to each of the plurality of cameras on each of corresponding one or more groups of one or more objects through the common optical path of the external lens and the beam splitter;
evaluating, focusing and tracking, by each corresponding auto-focus lens of each of the multiple cameras, the focusing distances to each of the plurality of cameras on each of corresponding one or more groups of one or more objects through a second lens system sharing the common optical path of the external lens and the beam splitter; and
evaluating, focusing and tracking, by each corresponding auto-focus lens of each of the multiple cameras, the focusing distances to each of the plurality of cameras on each of corresponding one or more groups of one or more objects through an ancillary optical path.

14. The method of one of claims 9 to 13, further comprising:
recording related data of the set of focused images, wherein the related data of the set of focused images comprises:
a total number of focused images in the set of focused images;
a time the set of focused images is captured;
one or more optical conditions when the set of focused images is captured;
GPS location coordinates where the set of focused images is captured;
data needed to determine focusing distances to each of the one or more groups of one or more objects within the visual scene for each focused image; and
data needed to determine the boundaries of each of the one or more groups of one or more objects within the visual scene for each focused image.

15. The method of claim 18,
further comprising:
assisting each of the plurality of cameras in reducing the time needed to reacquire focus on the each of the one or more groups of one or more objects during an image capturing cycle using the data needed to determine focusing distances to each of the one or more groups of one or more objects;
or/and
further comprising:
assisting each of the plurality of cameras and the image processing device to reduce the image file size of the set of focused images using the data needed to determine the boundaries of each of the one or more groups of one or more objects.
